# EUROPÄISCHE PATENTSCHRIFT

(11) **EP 3 084 573 B1**
(45) Veröffentlichungstag und Bekanntmachung des Hinweises auf die Patenterteilung: **07.06.2023**
(21) Anmeldenummer: 14827196.8
(22) Anmeldetag: 18.12.2014
(51) Int. Cl.: G06F 3/042, D06F 39/00

(54) **ANZEIGE-BEDIENFELD MIT MODULIERTEM LICHT**
DISPLAY OPERATING PANEL WITH MODULATED LIGHT
CHAMP DE COMMANDE ET D'AFFICHAGE À LUMIÈRE MODULÉE

(30) Priorität: 19.12.2013 DE 102013226633
(43) Veröffentlichungstag der Anmeldung: 26.10.2016
(73) Patentinhaber: BSH Hausgeräte GmbH, 81739 München (DE)
(72) Erfinder: EGLMEIER, Hans, 10587 Berlin (DE)
(86) Internationale Anmeldenummer: PCT/EP2014/078478
(87) Internationale Veröffentlichungsnummer: WO 2015/091806

(56) Entgegenhaltungen:
- WO-A2-2008/004101
- DE-A1-102011 077 896
- US-A1- 2010 225 581
- US-A1- 2011 304 589

## Beschreibung

Die Erfindung betrifft ein Haushaltsgerät mit einem Anzeige-Bedienfeld mit einer wenigstens teilweise lichtdurchlässigen Bedienplatte, einer Mehrzahl von Lichtquellen, und wenigstens einem Detektor, wobei die Bedienplatte eine Bedienoberfläche aufweist, der wenigstens eine Detektor bei einer Berührung der Bedienoberfläche das von den Lichtquellen ausgesandte Licht detektiert und die Lichtquellen in einer für das menschliche Auge nicht unmittelbar wahrnehmbaren Weise moduliertes Licht emittieren.

Unter dem Begriff Anzeige-Bedienfelder werden Anzeigeeinheiten verstanden, die unter einer gemeinsamen Oberfläche Anzeigeelemente und Bedienelemente aufweisen. Als robust haben sich Anzeige-Bedienfelder erwiesen, die auf Berührung reagieren, da sie keine mechanisch beweglichen Bestandteile erfordern. Besonders günstig hat es sich herausgestellt die Bedienelemente räumlich nahe zu den Anzeigelementen für die entsprechende Funktion anzuordnen. Dann ist die Bedienung für den Benutzer in der Regel selbsterklärend und intuitiv zu erfassen. Meist kann dann auf zusätzliche Beschriftungen für die Bedienelemente verzichtet werden.

Bekannt ist es, die Bedienelemente als kapazitive oder resistive Berührungssensoren auszubilden. Damit kann eine Berührung an einem bestimmten Ort der Bedienoberfläche erfaßt werden. Wenn dieser Ort zudem einem Anzeigeelement für eine bestimmte Funktion zugeordnet ist, kann die erfaßte Berührung als Bedienung des Bedienelements aufgefaßt werden, welches zu der entsprechenden Funktion gehört.

Derartige Anzeige-Bedienfelder sind im Stand der Technik bekannt. So zeigt die DE 10 2011 077 896 A1 ein Anzeige-Bedienfeld, bei dem unter einer Bedienplatte in Form einer Kunststoffscheibe Anzeigeelemente angeordnet sind, die verschiedene Betriebszustände und Programmoptionen eines Haushaltsgerätes anzeigen können.

Um kapazitive oder resistive Berührungssensoren zu realisieren, kann eine Bedienplatte mit leitfähigen Schichten ausgestattet sein. Das Problem besteht darin, dass die leitfähigen Schichten möglichst lichtdurchlässig sein sollten, um die Sichtbarkeit der Anzeigeelemente nicht zu beeinträchtigen.

Es ist bekannt, dass manche Lichtquellen so beschaltet werden können, dass sie als Licht-Detektoren fungieren. So beschreibt J. Han in der US_20060086896_A1 eine Anzeige-Bedieneinheit, bei der in einer Matrix, nebeneinanderliegende LEDs abwechselnd als Sender oder Empfänger geschaltet auf Licht reagieren, welches durch Berührung der LEDs vom Finger des Berührenden gestreut und reflektiert wird. Nachteilig bei dieser Anzeige-Bedieneinheit ist, dass die als Empfänger geschalteten LEDs auch von eventuell einfallendem Umgebungslicht erregt werden können. Ein weiteres Anzeige-Bedienfeld ist in der US 2011304589 A1 offenbart.

Zur Lösung dieses Problems schlägt T. Potoschnig in seiner Diplomarbeit (Entwicklung eines Multitouchsensors für LCD-Bildschirme, TU München 15.5.2009) vor, das ausgesendete Licht mit einer Frequenz von 10 kHz zu modulieren. Dazu ist ein höherer Schaltungsaufwand erforderlich.

Die Erfindung schafft ein Haushaltsgerät mit einem Anzeige-Bedienfeld mit einer geringen Fremdlichtempfindlichkeit und verringertem Schaltungsaufwand bei erhöhter Auflösung.

Zu diesem Zweck ist bei einem Anzeige-Bedienfeld mit einer wenigstens teilweise lichtdurchlässigen Bedienplatte, einer Mehrzahl von Lichtquellen und wenigstens einem Detektor, bei dem die Bedienplatte eine Bedienoberfläche aufweist, der wenigstens eine Detektor bei einer Berührung der Bedienoberfläche das von den Lichtquellen ausgesandte Licht detektiert und die Lichtquellen in einer für das menschliche Auge nicht unmittelbar wahrnehmbaren Weise moduliertes Licht emittieren, vorgesehen, dass die Lichtquellen jeweils individualisiertes Licht aussenden. Unter individualisiertem Licht ist im Sinne der Erfindung zu verstehen, dass die Intensität des von der Lichtquelle ausgesandten Lichtes im zeitlichen Verlauf für verschiedene Lichtquellen unterschiedlich beeinflußt ist. Dabei kann die Individualität der verschiedenen Lichtquellen darin bestehen, dass der Intensitätsverlauf der verschiedenen Lichtquellen unterschiedliche Frequenz-, Amplituden- oder Phasenverläufe oder Kombinationen davon aufweist. Die Individualität des von einer bestimmten Lichtquelle ausgesandten Lichtes kann darüber hinaus alternativ oder zusätzlich auch in einer bestimmten Lichtwellenlänge bestehen. Das von einem Detektor detektierte Licht ist also infolge der Individualisierung einer Lichtquelle zuordenbar. Damit ist es auch möglich, den Ort der Berührung auf der Bedienoberfläche, den Berührort, zu ermitteln.

Erfindungsgemäß weist wenigstens ein Teil der Lichtquellen wenigstens ein Leuchtelement auf, das als Detektor betreibbar ist. Diese Leuchtelemente können als Detektor geschaltet sein solange sie kein Licht aussenden, indem sie beispielsweise von einem Sendemodus, in dem sie Licht aussenden in einen Empfangsmodus, in dem sie Licht von anderen Lichtquellen detektieren umgeschaltet werden. Auf separate Detektoren kann dann, zum Teil oder vollständig, verzichtet werden. Beispielsweise wenn die Lichtquellen als Symbolhinterleuchtung fungieren, können Leuchtelemente bei diejenigen Lichtquellen, deren Symbole aktuell nicht beleuchtet sein müssen als Detektor geschaltet sein. Oder die Leuchtelemente werden so schnell zwischen dem Sendemodus und dem Empfangsmodus umgeschaltet, dass die Phase des Empfangsmodus für das menschliche Auge nicht wahrnehmbar ist. Damit wird vermieden, dass ein Benutzer das Umschalten störend als Flackern empfindet. Es können auch bei Lichtquellen, die gleichzeitig beispielsweise dasselbe Symbol beleuchten, Leuchtelemente abwechselnd im Sende- oder Empfangsmodus geschaltet sein. Oder bei Segmentanzeigen, welche verschiedene Ziffern oder Zeichen anzeigen können, werden einzelne Leuchtelemente in Segmenten, die zur Anzeige eines Zeichens aktuell nicht beleuchtet sein müssen, in den Empfangsmodus geschaltet. Die als Detektoren geschalteten Leuchtelemente können dann das Licht von einer anderen Lichtquelle empfangen, das bei einer Berührung der Bedienoberfläche zu dem Empfänger reflektiert oder gestreut wird. Dabei kann die Streuung oder Reflektion beispielsweise das Berühren mit einem Finger oder einem Gegenstand als Ursache haben. Es können zusätzlich zu den Leuchtelemente, die in einen Empfangsmodus geschaltet werden können aber auch weitere Detektoren vorhanden sein, beispielsweise, um eine Berührung in einem Bereich zu detektieren, in welchem keine Lichtquellen vorhanden sind.

Erfindungsgemäß ist der wenigstens eine Detektor so angeordnet, dass er Licht empfängt, welches sich in der Ebene der Bedienplatte ausbreitet. Das von den Lichtquellen ausgesandte Licht wird bei einer Berührung der Bedienoberfläche von dem berührenden Gegenstand oder von beispielsweise einem Finger in die Bedienplatte zurück reflektiert und kann sich dort teilweise auch wie in einem Lichtleiter in der Ebene der Bedienplatte also parallel zu der Bedienoderfläche ausbreiten. Daher kann es auch von einem oder mehreren Detektoren empfangen werden, die sich an einer anderen Stellen der Bedienplatte befinden, an denen sich dieses Licht auskoppeln läßt. Dies kann bei einer einfachen ebenen Platte beispielsweise der Rand sein. Die Bedienplatte kann aber auch mit Ausformungen versehen sein, die das Licht an andere Orte leiten, beispielsweise auf eine unter der Bedienplatte angeordnete Platine, die auch die Lichtquellen trägt. Oder die Bedienplatte ist optisch an einen Lichtleiter angekoppelt, der das Licht von der Berührstelle zu dem einen oder mehren Detektoren leitet. Der Detektor kann dann vorteilhafterweise für die Detektion des gestreuten und weitergeleiteten Lichts speziell ausgebildet und optimiert sein.

Erfindungsgemäß ist das Licht der Lichtquellen durch eine Codierung so individualisiert, dass sich auch bei einer Überlagerung des Lichtes benachbarter Lichtquellen die aussendenden Lichtquellen bestimmen lassen. Dies hat den Vorteil, dass auch wenn Detektoren Licht von mehreren Lichtquellen gleichzeitig detektieren, noch bestimmt werden kann, von welchen Lichtquellen das Licht stammt und damit rückgeschlossen werden kann auf den Ort, an dem die Berührung stattfindet. Dies kann zum Beispiel der Fall sein, wenn die Berührungsstelle so groß ist, dass Licht von mehreren Lichtquellen gestreut oder reflektiert wird, oder wenn sich der Berührort in einem Zwischenraum zwischen verschiedenen Lichtquellen befindet. Wenn sich das detektierte Licht von den unterschiedlichen Lichtquellen trennen läßt und die Intensität der einzelnen Bestandteile des Lichtes bestimmbar ist, dann kann auch bei einer Zwischenposition zwischen individualisierten Lichtquellen der Berührort noch genauer bestimmt werden. Damit läßt sich auf einfache Weise die Genauigkeit des Bedienfeldes erhöhen.

Die Codierung kann beispielsweise in Form unterschiedlicher, voneinander unabhängiger Impulsfolgen ausgeführt sein. Dabei sollte sich bei jeder Addition von Impulsfolgen eine neue Impulsfolge ergeben, die von jeder ursprünglichen, wie auch von jeder möglichen Summe von Impulsfolgen verschieden ist. Insbesondere können Impulsfolgen oder Frequenzen von Impulsfolgen linear unabhängig sein, indem sie beispielsweise eine Reihe von Primzahlen repräsentieren. Eine weitere Möglichkeit ist auch die Verwendung unterschiedlicher Farben. Bevorzugt können dabei Detektoren eingesetzt werden, die auf unterschiedliche Wellenlängen empfindlich sind.

Erfindungsgemäß ist das Licht der Lichtquellen durch eine Codierung so individualisiert, dass sich auch bei einer Überlagerung des Lichtes verschiedener Lichtquellen die aussendenden Lichtquellen bestimmen lassen. Dadurch lassen sich auch mehrere Berührorte gleichzeitig eindeutig bestimmen.

In einer weiteren vorteilhaften Ausführungsform der Erfindung weisen die Lichtquellen Leuchtelemente auf, die als LEDs ausgebildet. LEDs haben den Vorteil, dass sie sehr kostengünstig sind und sich mit Frequenzen schalten lassen, die für das menschliche Auge bei weitem nicht mehr wahrnehmbar sind. LEDs lassen sich zudem besonders einfach zwischen einem Sendemodus und einem Empfangsmodus umschalten. Darüber hinaus sind aber auch andere Leuchtelemente, die sich modulieren lassen für die Zwecke der Erfindung einsetzbar, beispielsweise Fluoreszenzanzeigen oder Leuchtelemente mit einem schaltbaren Polfilter, Flüssigkristallanzeigen (LCD). Die Individualisierung des von den Lichtquellen ausgesandten Lichtes kann hier durch individuell steuerbare Filter, die beispielsweise in Form einer Flüssigkristallanzeige (LCD) realisiert sein können, erfolgen. Die Zuordnung des detektierten Lichtes zu einer bestimmten Lichtquelle oder einem Leuchtelement kann vorteilhaft über den Zeitpunkt der Pixelansteuerung und gegebenenfalls zusätzlich über eine separate zeitliche Ansteuerung der Intensität der Hintergrundbeleuchtung der LCD, beispielsweise mit Impulsfolgen wechselnder Frequenz (Sweeps) bestimmt werden.

Ein weiterer Aspekt der Erfindung betrifft ein Haushaltsgerät mit einem derartigen Anzeige-Bedienfeld. Ein solches Haushaltsgerät bietet wegen des verringerten Schaltungsaufwandes eine kostengünstig und einfach herzustellende Eingabemöglichkeit für die Bedienung des Haushaltsgerätes z.B. zum Ein-Ausschalten, Programmwählen etc. Mit der Erfindung lassen sich einfach bedienbare, aber kontaktlose und damit robuste kombinierte Eingabe und Anzeigemöglichkeiten schaffen.

Weitere Merkmale und Vorteile der Erfindung ergeben sich auch aus den Unteransprüchen und der folgenden Beschreibung einer Ausführungsform unter Bezugnahme auf die beigefügten Zeichnungen, in denen zeigt,
- Fig. 1.: eine schematische Schnittdarstellung eines Anzeige-Bedienfelds gemäß einer ersten Ausführungsform der Erfindung;
- Fig. 2.: eine schematische Ansicht eines Hausgerätes mit einem Anzeige-Bedienfeld gemäß der Erfindung;
- Fig. 3.: eine schematische Schnittdarstellung eines Anzeige-Bedienfelds gemäß einer zweiten Ausführungsform der Erfindung;
- Fig. 4.: eine schematische Schnittdarstellung eines Anzeige-Bedienfelds gemäß einer dritten Ausführungsform der Erfindung;
- Fig. 5.: eine schematische Schnittdarstellung eines Anzeige-Bedienfelds gemäß einer vierten Ausführungsform der Erfindung;
- Fig. 6.: eine schematische Schnittdarstellung eines Anzeige-Bedienfelds gemäß einer fünften Ausführungsform der Erfindung;
- Fig. 7.: eine Ansicht eines erfindungsgemäßen Anzeige-Bedienfeldes;
- Fig. 8.: ein erstes Beispiel für eine codierte Impulsfolge zur Individualisierung verschiedener Lichtquellen;
- Fig. 9.: ein zweites Beispiel für eine codierte Impulsfolge zur Individualisierung verschiedener Lichtquellen; und
- Fig. 10.: ein drittes Beispiel für eine codierte Impulsfolge zur Individualisierung verschiedener Lichtquellen.

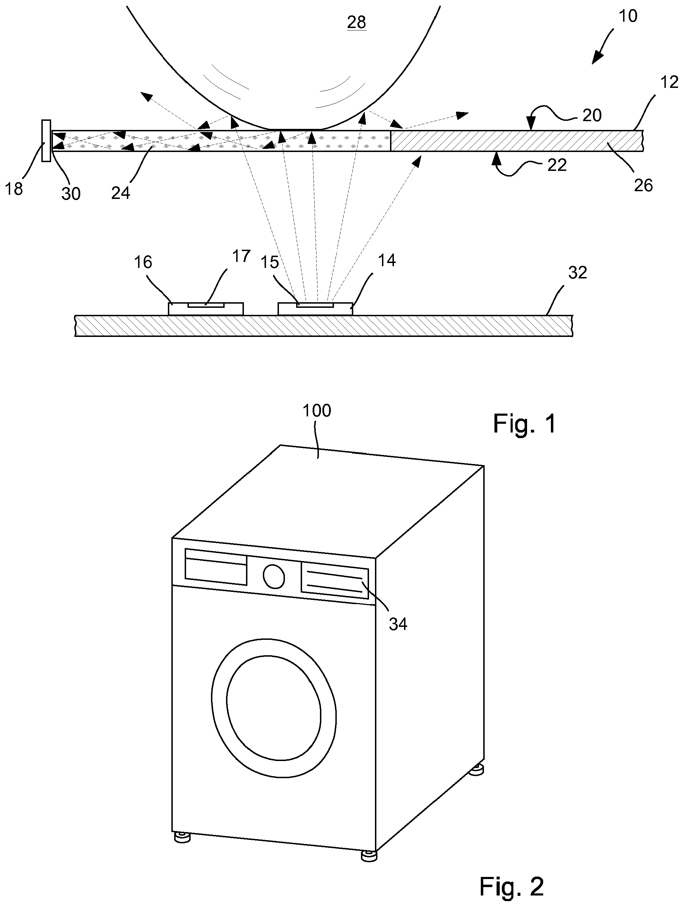

In Figur 1 ist ein Anzeige-Bedienfeld 10 nach einer ersten Ausführungsform der Erfindung zu sehen. Das Anzeige-Bedienfeld 10 weist eine Bedienplatte 12, eine erste Lichtquelle 14, eine zweite Lichtquelle 16 und einen Detektor 18 auf. Die erste Lichtquelle 14 weist ein Leuchtelement 15, die zweite Lichtquelle 16 ein Leuchtelement 17 auf. Die beiden Leuchtelemente 15, 17 sind als LEDs ausgebildet.

Die Bedienplatte 12 ist als ebene Platte ausgeführt, mit einer Bedienoberfläche 20 und einer Rückseite 22, welche den Lichtquellen 14, 16 zugewandt ist. Die Bedienoberfläche 20 ist zur Berührung durch einen Gegenstand oder den Finger einer Bedienperson vorgesehen, um eine Bedienung eines Gerätes durchzuführen. Die Bedienplatte 12 ist in der dargestellten Ausführungsform teilweise lichtdurchlässig, da sie in einem Fensterbereich 24 über den Lichtquellen 14, 16 transparent, in einem Maskenbereich 26 lichtundurchlässig ausgeführt ist. In Figur 1 ist ein Finger 28 einer Bedienperson schematisch angedeutet, welcher die Bedienoberfläche 20 gegenüber der Lichtquelle 14 im Fensterbereich 24 berührt.

In dem transparenten Fensterbereich 24 hat die Bedienplatte 12 die Eigenschaften eines Lichtleiters, d.h. aufgrund der Totalreflexion breitet sich Licht innerhalb des Fensterbereichs 24 parallel zur Ebene der Bedienplatte 12 aus. An einer Schmalseite 30 am Rand des transparenten Fensterbereichs 24 ist eine Lichtaustrittsfläche gebildet, an welcher der Detektor 18 angeordnet ist. Der Detektor 18 kann das Licht detektieren, welches sich im transparenten Fensterbereich 24 ausbreitet.

Die Lichtquellen 14, 16 sind auf einer Leiterplatte 32 angebracht. Dabei kann die Leiterplatte 32 beispielsweise als Platine oder auch als Folienleiterplatte ausgebildet sein. Das von den Lichtquellen 14, 16 ausgesandte Licht tritt im Fensterbereich 24 durch die Bedienplatte 12 hindurch und kann damit beispielsweise eine Funktion eines Gerätes anzeigen. In Figur 1 ist durch Pfeile schematisch angedeutet, wie sich Licht von der ersten Lichtquelle 14 ausbreiten kann. In dem Bereich, in dem der Finger 28 die Bedienoberfläche 20 berührt, wird Licht der ersten Lichtquelle 14 in den Fensterbereich 24 gestreut und breitet sich in der Ebene der Bedienplatte 12 aus. Dadurch kann es von dem Detektor 18 detektiert werden. Von der zweiten Lichtquelle 16 ausgesandtes Licht (in Figur 1 nicht dargestellt) tritt hingegen im wesentlichen ungehindert durch die Bedienplatte 12 hindurch und wird von dem Detektor 18 nicht, oder jedenfalls nur in wesentlich geringerem Maße als das Licht von der ersten Lichtquelle 14, detektiert.

Erfindungsgemäß sind die Lichtquellen 14, 16 jeweils individualisiert, sodass das am Detektor 18 detektierte Licht einer bestimmten Lichtquelle zugeordnet werden kann. Daher kann von dem Detektorsignal auf den Berührort geschlossen werden, an dem der Finger 28 die Bedienoberfläche berührt. Die Individualisierung der Lichtquellen 14, 16 ist bevorzugt so gewählt, dass sich das Licht von eventuell vorhandenem Hintergrundlicht, insbesondere von künstlichen Lichtquellen, beispielsweise Leuchtstofflampen oder LED-Lampen unterscheidet. Die Individualisierung kann beispielsweise aus einer Impulsfolge bestehen. Dabei können für die Impulsfolge gleichbleibende oder wechselnde Frequenzen oder unterschiedlicher Tastverhältnisse herangezogen werden.

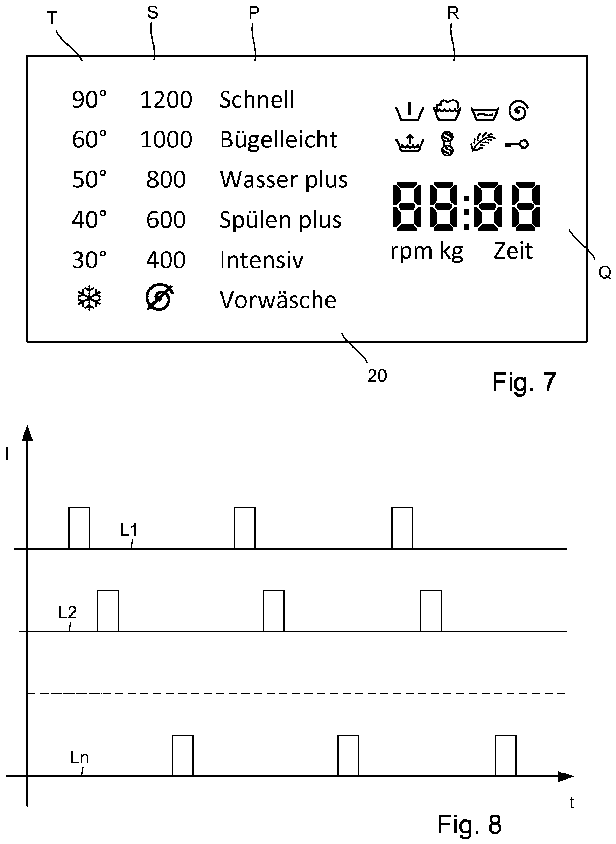

Figuren 8 bis 10 zeigen schematisch Beispiele für die Individualisierung des von Lichtquellen ausgesandten Lichtes. In Figur 8 sind die Intensitäten I für Lichtquellen L1 bis Ln über der Zeit t dargestellt. Jede der Lichtquellen sendet Lichtpulse gleicher Intensität und gleicher Impulslänge in gleicher zeitlicher Folge aus. Die Individualisierung besteht hier darin, dass die Impulse aber zeitlich versetzt erfolgen, also die Impulsfolgen einen Phasenunterschied aufweisen.

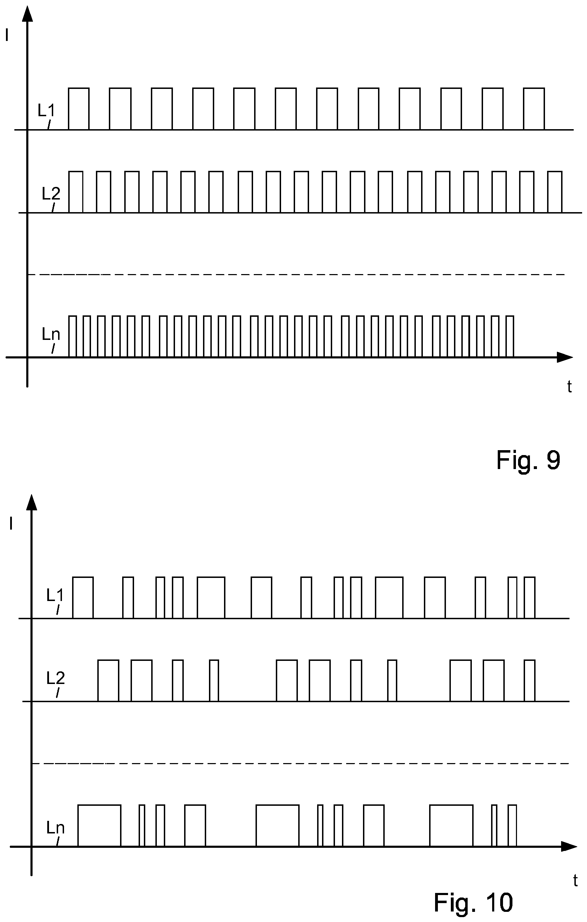

In Figur 9 sendet jede der Lichtquellen eine Folge Lichtpulse gleicher Intensität aber unterschiedlicher Frequenz aus.

Bevorzugt ist das Licht, das die Lichtquellen 14, 16 aussenden, durch eine Codierung so individualisiert, dass sich die Signale benachbarter Lichtquellen 14, 16 auch bei einer Überlagerung voneinander trennen lassen, d.h. dass die Codierungen des Lichts unterschiedlicher Lichtquellen kombinatorisch voneinander unabhängig sind. Dann kann anhand des Detektorsignals bestimmt werden, von welcher der Lichtquellen das detektierte Licht stammt auch wenn beide Lichtquellen 14 und 16 gleichzeitig Licht aussenden. Auf diese Weise läßt sich eine höhere Leuchtstärke erzielen und dennoch der Berührort eindeutig bestimmen. Darüber hinaus kann aus einer Auswertung des Intensitätsverhältnisses des Lichts unterschiedlicher Modulation eine höhere Auflösung bei der Bestimmung des Berührorts erzielt werden. Figur 10 zeigt schematisch ein Beispiel für Impulsfolgen, die mit einer für jede der Lichtquellen (in Figur 10 mit L1 L2,.., Ln bezeichnet) individuellen Codierung versehen sind.

Bevorzugt ist das Licht, welches die Lichtquellen 14, 16 aussenden, so codiert, dass die abgegebene Lichtintensität für unterschiedliche Lichtquellen im Mittel gleich ist. Damit ergibt sich für den Betrachter an allen Lichtquellen dieselbe Leuchtstärke.

Die Bedienplatte 12 ist wenigstens teilweise lichtdurchlässig, indem sie ganz oder bereichsweise transparent, wenigstens aber ganz oder bereichsweise opak ausgebildet ist. Die Bedienplatte 12 kann beispielsweise einen Teil eines Gehäuses, insbesondere ein Bedienpanel 34 eines Haushaltsgerätes bilden, wie es in Figur 2 am Beispiel einer Waschmaschine 100 gezeigt ist.

In Figur 1 ist exemplarisch eine Anordnung mit zwei Lichtquellen 14, 16, einem Detektor 18 und einem Fensterbereich 24 dargestellt. Diese Anordnung erlaubt die Detektion einer Berührung der Bedienoberfläche 20 und die Bestimmung des Berührortes in einem Funktionsbereich. Dieser Funktionsbereich ist definiert über die Ausleuchtung der Bedienplatte 12 durch die Lichtquellen 14, 16.

Ein erfindungsgemäßes Anzeige-Bedienfeld kann eine oder mehrere derartige Anordnungen enthalten und demgemäß einen ausgedehnteren Funktionsbereich umfassen. Dabei können die eine oder mehrere Anordnungen mehr als zwei Lichtquellen und/oder mehrere Detektoren aufweisen. Mit mehreren Lichtquellen, kann die Ortsauflösung der Bedienung auf einfache Weise erhöht werden, indem zumindest für jede Lichtquelle, deren Licht individualisiert ist, wenigstens ein Berührort festgestellt werden kann. Dabei kann ein gemeinsamer Fensterbereich allen Lichtquellen zugeordnet sein. Oder es können mehrere getrennte Fensterbereiche vorgesehen sein, denen dann jeweils ein oder mehrere Detektoren zugeordnet sind. In diesem Fall genügt es, wenn die Codierung des Lichtes der Lichtquellen nur innerhalb eines Fensterbereiches, kombinatorisch voneinander unabhängig ist. D.h., dass das detektierte Licht von den Lichtquellen desselben Fensterbereichs bei einer Überlagerung separierbar sein muß.

In Figur 7 ist in einer Ansicht auf die Bedienoberfläche 20 eines Anzeige-Bedienfelds 10 am Beispiel eines Anzeige-Bedienfeldes einer Waschmaschine dargestellt, welche Anzeige und Bedienmöglichkeiten die erfindungsgemäße Vorrichtung bietet. Durch die Bedienoberfläche sind diverse Funktionsanzeigen P, Q, R, S, T als Symbole oder Wertebereiche sichtbar. Aus den zur Verfügung stehenden Werten kann beispielsweise durch Antippen eines Wertes oder Symbols eine Funktion oder eine bestimmte Einstellung ausgewählt werden. Beispielsweise ein Wert für die Waschtemperatur T, die Schleuderdrehzahl S, ein Pflegeprogramm P oder eine Programmoption R. Gemäß der Erfindung gibt es diverse Ausgestaltungsmöglichkeiten für ein derartiges Anzeige-Bedienfeld 10. Die beiden Lichtquellen 14, 16 können jeweils unterschiedliche Werte oder Symbole für die Funktionsanzeigen beleuchten. Z.B kann in der dargestellten Bedienoberfläche die Lichtquelle 14 den Wert "90°" beleuchten, die Lichtquelle 16 den Wert "60°" und weitere Lichtquellen die übrigen Werte. Die Lichtquellen 14 und 16 können alternativ gemeinsam einen Wert beleuchten, insbesondere, wenn die Darstellung des Wertes eine größere Fläche beansprucht, z.B. den Wert "Schnell" der Programmauswahl P. Es kann vorgesehen sein, dass die Lichtquellen 14, 16 und weitere Lichtquellen jeweils ein Segment der numerischen 7-Segmentanzeige Q ausleuchten. In einer weiteren Variation können die beiden Lichtquellen 14 und 16 jeweils gemeinsam ein Segment der numerischen 7-Segmentanzeige Q ausleuchten, wobei für die übrigen Segmente weitere Lichtquellen vorgesehen sind.

In der in Figur 7 dargestellten Ausgestaltung kann beispielsweise vorgesehen sein, dass zur Auswahl eines Wertes zunächst alle Werte einer Funktion von den zugeordneten Lichtquellen beleuchtet werden, beispielsweise die Werte "90°", "60°", "50°", "40°", "30°" und das Sternsymbol für die zur Verfügung stehenden Waschtemperaturen. Durch Berühren der Bedienoberfläche 20 an einem der Werte wird in einem Detektor das gestreute Licht der zugehörigen Lichtquelle registriert. Aufgrund der Individualisierung des Lichts kann auf die Lichtquelle und damit auf den Berührort rückgeschlossen werden. Der entsprechende Wert ist damit gewählt und kann nun als gewählt angezeigt werden, beispielsweise indem der Wert in der Beleuchtung hervorgehoben wird, etwa durch eine höhere Leuchtstärke, Blinken oder eine andere Lichtfarbe, wenn als Lichtquelle beispielsweise Mehrfarb-LEDs eingesetzt werden. Oder die Beleuchtung der anderen Werte wird nach Auswahl eines Wertes vermindert.

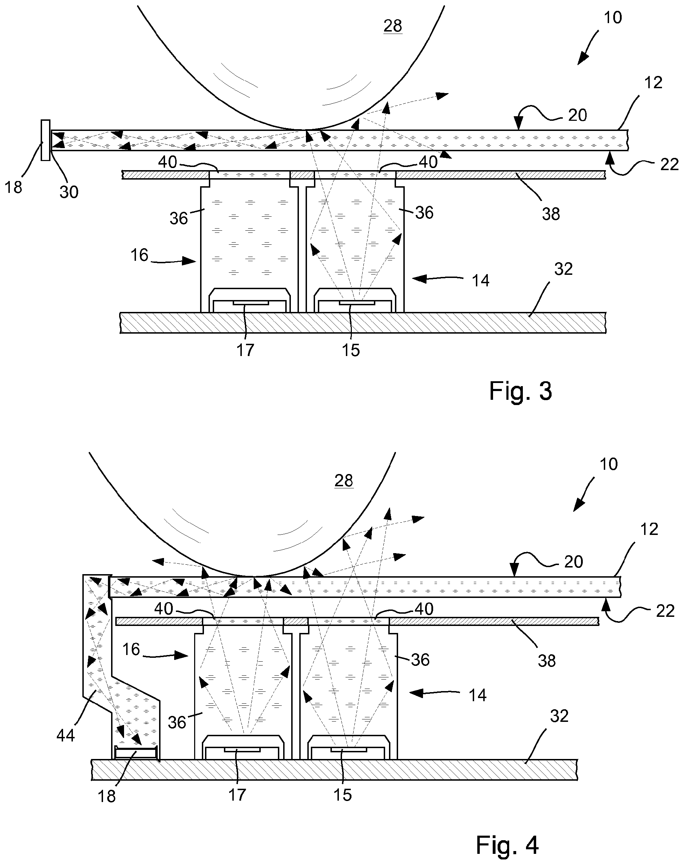

Eine zweite, verbesserte Ausführungsform ist in Figur 3 dargestellt. In dieser Ausführungsform ist jede der Lichtquellen 14, 16 mit einem Lichtleitkörper 36 ausgestattet, der das von der Lichtquelle 14, 16 abgestrahlte Licht zu der Bedienplatte 12 leitet. Der Lichtleitkörper 36 verbessert jedoch die Ausleuchtung eines bestimmten Bereiches der Bedienplatte 12. Statt des Lichtleitkörpers 36 oder zusätzlich zu diesem, kann auch ein Lichtschacht oder ein anderes Mittel vorgesehen sein, das die Lichtquelle 14 zu einer benachbarten Lichtquelle 16 hin abschattet.

Zwischen der Bedienplatte 12 und den Lichtleitkörpern 36 ist eine Streuscheibe 38 vorgesehen. Die Streuscheibe 38 ist in Fensterbereichen 40, in denen sie an die Lichtleitkörper 36 grenzt, lichtdurchlässig. In den übrigen Bereichen ist die Streuscheibe 38 lichtundurchlässig, um die Bedienplatte 12 gegen Streulicht von den Lichtquellen 14, 16 abzuschirmen.

Die Bedienplatte ist in dieser Ausführungsform vollständig transparent ausgebildet, und an einer Schmalseite 30 mit einem Detektor versehen, der bei einer Berührung der Bedienoberfläche das Licht von den Lichtquellen 14, 16 detektieren kann. Es können darüber hinaus auch weitere Detektoren an der Schmalseite 30 oder an anderen Schmalseiten, an denen Lichtaustrittsflächen gebildet sind, angeordnet sein.

Die Streuscheibe 38 kann auch als vollständig transparente Platte ausgebildet sein, auf der durch Bedrucken mit einer Maske Fensterbereiche und lichtundurchlässige Bereiche ausgebildet sind.

In Weiterbildung der Ausführungsform können der eine oder die mehreren Detektoren zusätzlich, oder statt an der Bedienplatte, an der Streuscheibe angekoppelt sein. In diesem Fall muß die Streuscheibe optisch an die Bedienplatte, insbesondere an dort eventuell ausgebildete lichtdurchlässige Fensterbereiche angekoppelt sein. Zum Beispiel, indem die Streuscheibe direkt an die Rückseite der Bedienplatte angebracht ist. Es können dabei in der Streuscheibe mehrere getrennte Fensterbereiche vorgesehen sein, denen dann jeweils ein oder mehrere Detektoren zugeordnet sind. Wenn die Fensterbereiche auf der Streuscheibe durch Bedrucken mit einer Maske gebildet sind, ist es möglich nur einen Detektor an der Streuscheibe vorzusehen.

In einer dritten, weiterbildenden Ausführungsform der Erfindung, die in Figur 4 dargestellt ist, ist die Bedienplatte 20 optisch mit einer Schmalseite an ein Lichtleiterelement 44 angekoppelt, welches das Licht aus der Bedienplatte 20 zu dem Detektor 18 leitet. Der Detektor 18 ist in der gezeigten Ausführungsform auf der Leiterplatte 32 angeordnet. Er kann alternativ anderswo angebracht sein, beispielsweise auf einer separaten Platine für eine Auswerteschaltung. In einer vorteilhaften Weiterbildung kann der Lichtleiter auch als integraler Bestandteil der Bedienplatte oder der Streuscheibe ausgebildet sein. Insbesondere, wenn die Bedienplatte und gegebenenfalls eine zusätzliche Bedruckungsfolie und/oder die Streuscheibe und oder die Leiterplatte zusammen eingespritzt werden, kann ein Lichtleiterelement vorteilhaft mit angespritzt werden. Wie in Figur 4 zu sehen ist, wird das individualisierte Licht aus der zweiten Lichtquelle 16 am Berührort auf der Bedienoberfläche 20 wenigstens teilweise in die Bedienplatte 12 zurückgestreut und erreicht über den Lichtleiter 44 den Detektor 18. Das individualisierte Licht aus der ersten Lichtquelle dagegen wird weitgehend außerhalb der Bedienplatte 12 am Finger 28 gestreut und erreicht den Detektor 18 nicht.

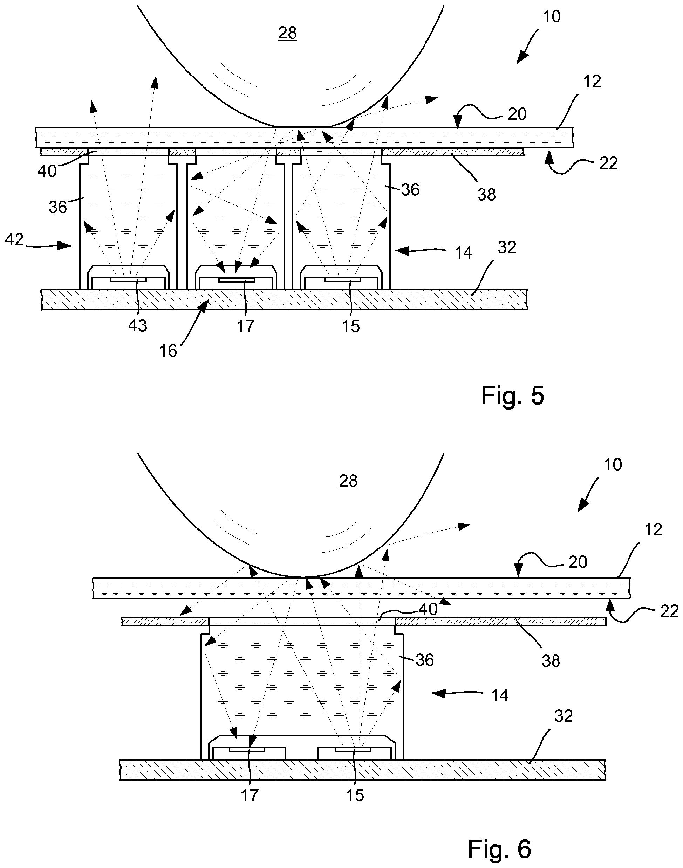

In einer vierten Ausführungsform der Erfindung, wie sie in Figur 5 exemplarisch dargestellt ist, sendet die erste Lichtquelle 14 individualisiertes Licht aus, während die zweite Lichtquelle 16 als Detektor geschaltet ist. Daher ist kein zusätzlicher separater Detektor erforderlich. Eine dritte Lichtquelle 42 mit einem Leuchtelement 43 sendet ebenfalls, aber unterschiedlich individualisiertes Licht aus. Das von der ersten Lichtquelle 14 ausgesandte Licht wird von der zweiten Lichtquelle detektiert, wenn der Finger 24 die Bedienoberfläche 20 im Funktionsbereich berührt. Die Individualisierung des Lichts von den Lichtquellen 14 und 42 gewährleistet, dass die Position des Berührortes sicher als im Funktionsbereich der Lichtquelle14 befindlich detektiert und von einem Berührort im Funktionsbereich der dritten Lichtquelle 42 diskriminiert werden kann.

Falls eine Berührung an einer anderen Position, etwa im Funktionsbereich einer anderen, hier nicht dargestellten, weiteren Lichtquelle stattfindet und von dieser Lichtquelle durch die Berührung Licht in die der Lichtquelle 16 detektiert wird, ist auf diese Weise gewährleistet, dass dieses Licht nicht fälschlicherweise als Berührung im Funktionsbereich der Lichtquelle 14 interpretiert wird.

In einer fünften Ausführungsform der Erfindung, wie sie in Figur 6 exemplarisch dargestellt ist, sendet ein Leuchtelement 15 einer Lichtquelle 14 individualisiertes Licht aus, während ein zweites Leuchtelement 17 als Detektor geschaltet ist. Im Unterschied zur vorangegangenen Ausführungsform sind hier die beiden Leuchtelemente 15, 17 unter einem gemeinsamen Lichtleitkörper zusammengefaßt und leuchten ein einziges Anzeigenelement, also z.B. einen Wert oder ein Symbol einer Funktionsanzeige aus. Die beiden Leuchtelemente 15, 17 werden beispielsweise abwechselnd als Detektor oder als Lichtquelle geschaltet, und zwar so schnell, dass das Umschalten für das menschliche Auge nicht störend wahrnehmbar ist. Damit ist die Erkennung einer Berührung im Funktionsbereich der Lichtquellen 14 ständig gegeben obwohl das entsprechende Symbol oder der Wert gleichmäßig ausgeleuchtet erscheinen.

Das Bedienfeld 10 kann in allen Ausführungsformen mit einer Beschriftung versehen sein, um die Bedeutung der Anzeige- und Bedienelemente zu verdeutlichen. Die Beschriftung kann beispielsweise als Bedruckung auf der Bedienoberfläche 20, der Rückseite der Bedienplatte 12 oder ggf. auf der Streuscheibe 26, auch in den Fensterbereichen, vorgesehen sein. Für die Beschriftung kann auch eine zusätzliche Folie über oder unter der Bedienplatte 12 oder der Streuscheibe 26 vorgesehen sein.

## Patentansprüche

1. Haushaltsgerät mit einem Anzeige-Bedienfeld (10) mit einer wenigstens teilweise lichtdurchlässigen Bedienplatte (12), einer Mehrzahl von Lichtquellen (14, 16, 42) und wenigstens einem Detektor (16, 18), wobei
- die Bedienplatte (12) eine Bedienoberfläche (20) aufweist,
- der wenigstens eine Detektor (14, 16, 18, 42) bei einer Berührung der Bedienoberfläche (20) das von den Lichtquellen (14, 16, 42) ausgesandte Licht detektiert,
- die Lichtquellen (14, 16, 42) in einer für das menschliche Auge nicht unmittelbar wahrnehmbaren Weise moduliertes Licht emittieren,
wobei die Lichtquellen (14, 16, 42) jeweils mittels einer Codierung individualisiertes Licht aussenden, dergestalt dass sich auch bei einer Überlagerung des Lichtes benachbarter Lichtquellen (14, 16, 42) und/oder verschiedener Lichtquellen (14, 16, 42) die aussendenden Lichtquellen (14, 16, 42) bestimmen lassen,
**dadurch gekennzeichnet, dass** wenigstens ein Teil der Lichtquellen wenigstens ein Leuchtelement (15, 17) aufweisen, welches als Detektor (18) betreibbar ist, wobei der wenigstens eine Detektor (18) so angeordnet ist, dass er Licht empfängt, welches sich in der Ebene der Bedienplatte (12) ausbreitet.

2. Anzeige-Bedienfeld nach Anspruch 1, bei dem das wenigstens ein Leuchtelement (15, 17) als LED ausgebildet ist.

## Claims

1. Household appliance having a display operating panel (10) with an operating panel (12) which is at least partially light-permeable, a plurality of light sources (14, 16, 42) and at least one detector (16, 18), wherein
- the operating panel (12) has an operating interface (20),
- the at least one detector (14, 16, 18, 42) detects the light emitted by the light sources (14, 16, 42) when the operating interface (20) is touched,
- the light sources (14, 16, 42) emit modulated light in a manner which is not immediately perceivable to the human eye,
wherein the light sources (14, 16, 42) each emit light which is individualised by means of a coding in such a way that even when the light is overlaid, adjacent light sources (14, 16, 42) and/or different light sources (14, 16, 42) allow the emitting light sources (14, 16, 42) to be determined,
**characterised in that** at least one part of the light sources have at least one diode (15, 17), which can be operated as a detector (18), wherein the at least one detector (18) is arranged so that it receives light which propagates in the plane of the operating panel (12).

2. Display operating panel according to claim 1, in which the at least one diode (15, 17) is embodied as an LED.

## Revendications

1. Appareil électroménager comprenant un panneau de commande et d'affichage (10) qui comprend une plaque de commande (12) au moins en partie transparente à la lumière, une pluralité de sources lumineuses (14, 16, 42) et au moins un détecteur (16, 18), dans lequel :
- la plaque de commande (12) comprend une surface de commande (20),
- l'au moins un détecteur (14, 16, 18, 42) détecte, lors d'un affleurement de la surface de commande (20), la lumière émise par les sources lumineuses (14, 16, 42),
- les sources lumineuses (14, 16, 42) émettent de la lumière modulée de manière non directement perceptible par l'oeil humain,
dans lequel les sources lumineuses (14, 16, 42) émettent de la lumière respectivement individualisée au moyen d'un codage de telle manière que, même lors d'une superposition de la lumière de sources lumineuses voisines (14, 16, 42) et/ou de sources lumineuses différentes (14, 16, 42), les sources lumineuses émettrices (14, 16, 42) peuvent être déterminées,
**caractérisé en ce qu'**au moins une partie des sources lumineuses comprennent au moins un élément lumineux (15, 17), qui peut fonctionner comme un détecteur (18), dans lequel l'au moins un détecteur (18) est agencé de telle manière qu'il reçoit de la lumière qui se propage dans le plan de la plaque de commande (12).

2. Panneau de commande et d'affichage selon la revendication 1, dans lequel l'au moins un élément lumineux (15, 17) est constitué sous forme de DEL.
